(19) Europäisches Patentamt
European Patent Office
Office européen des brevets

(11) EP 3 409 729 B1

(12) **EUROPEAN PATENT SPECIFICATION**

(45) Date of publication and mention of the grant of the patent:
**18.12.2019 Bulletin 2019/51**

(21) Application number: **17744042.7**

(22) Date of filing: **18.01.2017**

(51) Int Cl.:
***H01B 1/22*** *(2006.01)* ***H01B 1/02*** *(2006.01)*

(86) International application number:
**PCT/JP2017/001539**

(87) International publication number:
**WO 2017/130812 (03.08.2017 Gazette 2017/31)**

(54) **ELECTROCONDUCTIVE COMPOSITION, PRODUCTION PROCESS THEREFOR, AND ELECTROCONDUCTIVE MATERIAL**

ELEKTRISCH LEITFÄHIGE ZUSAMMENSETZUNG, HERSTELLUNGSVERFAHREN DAFÜR UND ELEKTRISCH LEITENDES MATERIAL

COMPOSITION ÉLECTROCONDUCTRICE, PROCÉDÉ DE PRODUCTION ASSOCIÉ, ET MATÉRIAU ÉLECTROCONDUCTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2016 JP 2016015287**
**28.10.2016 JP 2016211923**

(43) Date of publication of application:
**05.12.2018 Bulletin 2018/49**

(73) Proprietor: **Toyo Ink SC Holdings Co., Ltd.**
**Tokyo 104-8377 (JP)**

(72) Inventors:
- **NAGAI Hiroyuki**
  **Tokyo 1040031 (JP)**
- **UESUGI Takahiko**
  **Tokyo 104-0031 (JP)**
- **NOGAMI Takayuki**
  **Tokyo 1048381 (JP)**

(74) Representative: **Becker Kurig Straus**
**Patentanwälte**
**Bavariastrasse 7**
**80336 München (DE)**

(56) References cited:
**DE-A1-102013 108 664**
**JP-A- 2007 184 143**
**JP-A- 2007 184 143**
**JP-A- 2015 049 988**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 409 729 B1

## Description

### Technical Field

The present invention relates to an electroconductive composition, and a method for producing the same. Further, the present invention relates to an electroconductive material including a substrate and an electroconductive film which is a dried material or a cured material of an electroconductive composition.

### Background Art

As a method for producing a thin film for an electronic component or an electroconductive sheet, or a method for forming an electroconductive circuit, an etching method and a printing method are known. The etching method includes eliminating a part of metal coating using an etchant liquid to obtain a circuit pattern having a desired shape. The etching method generally includes complicated steps and requires an additional liquid-waste treatment, which leads to problems in cost and an environmental load. In addition, since an electroconductive circuit produced by the etching method is made of metal materials such as aluminum and copper, it does not withstand a physical impact such as bending.

Accordingly, in order to solve these problems and form an electroconductive circuit more economically, an electroconductive paste has drawn attention. An electroconductive circuit can be easily produced by printing using an electroconductive paste. Furthermore, since reduction in size and weight of an electronic component, improvement in productivity, and reduction in cost can be expected, a printable electroconductive paste has been extensively studied, which has led to a lot of proposals.

As an electroconductive paste, a silver paste containing silver (Ag) as a main component has been mainly used in view of maintaining high electroconductivity. However, when an electric current is passed through the silver paste under a high temperature and humidity, a silver atom is easily ionized, and attracted and moved by electric field, that is, ion migration (electrodeposition) easily occurs. When the ion migration occurs in wiring circuits, a short circuit occurs between the circuits, which may result in lower reliability of the wiring circuit.

Thus, in order to improve reliability of electronic apparatuses and wiring, a technique using a conductive paste containing copper instead of silver is proposed. Since ion migration hardly occurs in copper, reliability of connection in an electric circuit can be improved. Furthermore, a circuit pattern in which alternate electric signals are sent between electrical wiring, which is difficult using silver due to its inferior ion migration properties, becomes possible by using a copper paste.

However, a copper powder is generally easily oxidized. Thus, when the copper powder is exposed to a highly humid environment, it can easily react with water and oxygen contained in the environment to produce a copper oxide. Accordingly, an electroconductive film formed by firing a copper paste suffers from a problem that a volume resistivity of the whole electroconductive film can be easily increased due to the influence of the oxide film.

To solve these problems, a technique to produce a copper powder, which is mixed in a copper paste, by a wet reduction method is proposed. However, the problem of increase in a volume resistivity in a conductive paste for circuit wiring has not actually been sufficiently overcome.

A mechanism of passage of an electric current in a copper paste for circuit wiring is due to pressure connection of copper powders together by volume change of a coating film during firing, and thus electroconductivity is considerably influenced by an oxidation state of the surface of the copper powders or a packing structure of a resin in a coating film.

Conventionally, a technique including mixing a substance having reducing properties (hereinafter, referred to as a "reducing agent") such as catechol, resorcin, or hydroquinone into a copper paste to prevent oxidation of the surface of a copper powder has been proposed (e.g., Patent Literature 1). In addition, a technique to prevent oxidation of the surface of a copper powder by reducing ability of ascorbic acid is proposed (e.g., Patent Literatures 2 and 3).

### Citation List

### Patent Literature

Patent Literature 1: JP H8-73780 A
Patent Literature 2: WO 2014/104032 A
Patent Literature 3: JP 2015-049988 A
Patent Literature 4: JP2007184143 A

Summary of Invention

Technical Problem

As described above, it is important for an electroconductive film formed with a copper paste to suppress oxidation of the surface of a copper powder. However, by the methods described in Patent Literatures 1 to 3, the mixed reducing agents cannot sufficiently suppress the oxidation of copper. An object of the present invention is to provide an electroconductive composition which can form an electroconductive film showing good electroconductivity and wet-heat resistance even fired (hereinafter, also referred to as "dried" or "hardened") in the air. Patent Literure 4 also describes a copper paste comprising ascorbic acid.

Solution to Problem

The present inventors have made extensive studies to solve the problem, and have found that it is important to suppress oxidation of the surface of a copper powder and also to achieve intimate contact between the copper powders, and thus have made the present invention.

That is, the present invention relates to an electroconductive composition, including: a surface-treated copper powder (AB) in which ascorbic acid or a derivative thereof (B) represented by the following general formula (1) or general formula (2) is adhered to the surface of a copper powder (A); a binder resin (C); and a phosphoric acid group-containing dispersant (D) or an acidic group and amino group containing dispersant (D).

General formula (1)

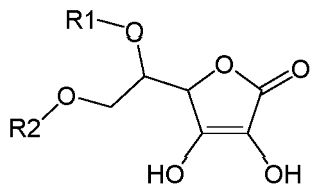

in general formula (1), R1 and R2, each independently, represent a hydrogen atom or an optionally substituted acyl group.

General formula (2)

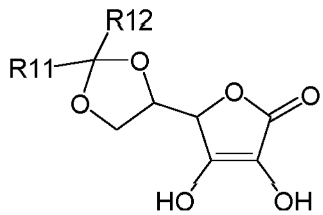

in general formula (2), R11 and R12, each independently, represent a hydrogen atom or an optionally substituted alkyl group.

The present invention further relates to a method for producing an electroconductive composition, including: adhering the above-described ascorbic acid or a derivative thereof (B) to the surface of a copper powder (A) to obtain a surface-treated copper powder (AB); and mixing the above-described surface-treated copper powder (AB), a binder resin (C), and an acidic group-containing dispersant (D).

Furthermore, the present invention relates to an electroconductive material, including: a substrate; and an electroconductive film which is a dried material or a cured material of the above-described electroconductive composition prepared by heating at a temperature of 120 to 190°C for 10 to 90 minutes.

Advantageous Effects of Invention

The present invention can provide an electroconductive composition which shows a good electroconductivity even with firing in the air and which can be used to form an electric circuit, and cured materials and stacked materials thereof.

Brief Description of Drawings

Fig. 1 is an image of conditions of the surface of a particle of the surface-treated copper powder (AB) used in Example 1 obtained by observation using a scanning electron microscope.

Fig. 2 is an image of element mapping of carbon and copper obtained by observation of conditions of the surface of the surface-treated copper powder (AB) used in Example 1 using an energy dispersive X-ray spectrometer.

Description of Embodiments

[Electroconductive composition]

An electroconductive composition of the present invention contains a surface-treated copper powder (AB) in which the surface of a copper powder (A) is treated with ascorbic acid or a derivative thereof (B) (hereinafter, also simply referred to as an "ascorbic acid derivative (B)") as described above, a binder resin (C), and an acidic group-containing dispersant (D).

<Surface-treated copper powder (AB)>

A surface-treated copper powder (AB) used in the present invention constitutes an electroconductive component of the electroconductive composition. In the surface-treated copper powder (AB), an ascorbic acid derivative (B) is adhered to at least a part of the surface of a copper powder (A). By coating at least a part of the copper powder (A) with the ascorbic acid derivative (B), the ascorbic acid derivative which is a reducing substance can exist in the vicinity of the surface of the copper powder (A), which results in effective reduction of a copper oxide which is produced when the electroconductive composition is fired in the air to reduce it to copper, leading to improvement in electroconductivity.

<Copper powder (A)>

A D50 average particle size of the copper powder (A) is preferably in a rage of 0.1 to 30 $\mu$m, and more preferably in a range of 0.1 to 10 $\mu$m. When the D50 average particle size is 0.1 $\mu$m or more, contact resistance between particles in an electroconductive film can be further reduced to improve electroconductivity. Further, when the D50 average particle size is 30 $\mu$m or less, a smoother electroconductive film can be formed when the electroconductive film is formed by screen printing. The D50 average particle size refers to a particle size at cumulative volume of 50% in a volume-based particle size distribution obtained using a laser diffraction particle size analyzer.

Shapes of the copper powder (A) are not limited as long as a desired electroconductivity can be achieved. Specifically, copper powders having publicly known shapes such as spherical shape, flake form, leaf shape, dendritic form, plate form, needle shape, rod shape, and aciniform can be used.

<Ascorbic acid derivative (B)>

An ascorbic acid or a derivative thereof (B) used in the present invention is represented by the following general formula (1) or general formula (2). A copper oxide reducing ability is due to an enediol structure in the ascorbic acid derivative (B). Thus, it is possible to synthesize a derivative of ascorbic acid in which the structure is retained to adjust solubility and polarity as desired, and the resulting derivative can be used.

General formula (1)

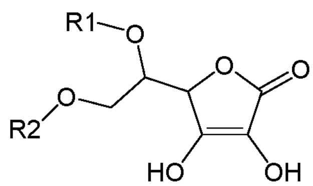

in general formula (1), R1 and R2, each independently, represent a hydrogen atom or an optionally substituted acyl group.

The acyl group (-COR) of R1 and R2 in general formula (1) refers to a carbonyl group having a $C_{1-18}$ linear, branched, monocyclic, or fused-polycyclic aliphatic group connected thereto, or a carbonyl group having a $C_{6-10}$ mono-

cyclic or fused-polycyclic aryl group connected thereto.

Examples of the acyl group specifically include, but are not limited to, a formyl group, an acetyl group, a propionyl group, a butyryl group, an isobutyryl group, a valeryl group, an isovaleryl group, a pivaloyl group, lauroyl group, myristoyl group, palmitoyl group, a stearoyl group, a cyclopentyl carbonyl group, a cyclohexyl carbonyl group, an acryloyl group, a methacryloyl group, a crotonoyl group, an isocrotonoyl group, an oleoyl group, a benzoyl group, 1-naphthoyl group, and 2-naphthoyl group.

In each of the acyl groups of R1 and R2, a hydrogen atom in the acyl group can be substituted by a substituent to further control solubility and polarity. Examples of the substituent include, but are not limited to, a hydroxyl group and a halogen atom.

General formula (2)

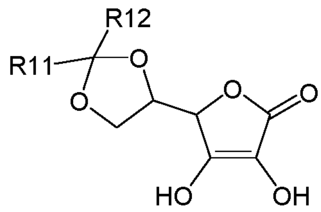

in general formula (2), R11 and R12, each independently, represent a hydrogen atom or an optionally substituted alkyl group.

General formula (2) represents a derivative in which an acetal structure or a ketal structure is formed by reacting two hydroxy groups which exist in a side chain of the ascorbic acid with an aldehyde or a ketone.

The alkyl group of R11 and R12 in general formula (2) includes a $C_{1-18}$ linear, branched, monocyclic, or fused-polycyclic alkyl group. Specific examples include, but are not limited to, a methyl group, an ethyl group, a propyl group, a butyl group, a pentyl group, a hexyl group, a heptyl group, an octyl group, a nonyl group, decyl group, dodecyl group, an octadecyl group, an isopropyl group, an isobutyl group, an isopentyl group, a sec-butyl group, a tert-butyl group, a sec-pentyl group, a tert- pentyl group, a tert-octyl group, neopentyl group, cyclopropyl group, cyclobutyl group, cyclopentyl group, cyclohexyl group, an adamantyl group, a norbornyl group, and 4-decyl-cyclohexyl group.

In each of the alkyl groups of R11 and R12, a hydrogen atom in the alkyl group can be substituted by a substituent to further control solubility and polarity. Examples of the substituent include, but are not limited to, a hydroxyl group and a halogen atom.

Further, R11 and R12 may be linked together to form a ring structure.

Among the ascorbic acid derivatives (B) represented by general formula (1) or general formula (2), ascorbic acid, in which R1 and R2 of general formula (1) are hydrogen atoms, is preferred in that it is available at a lowest price and hardly dissolved or detached from the surface of a copper powder (A) because of its low solubility. In connection with the copper powder (A), two types or more of ascorbic acid derivatives (B) may be used.

The "ascorbic acid" used in the present invention includes not only L-ascorbic acid, which is generally referred to as vitamin C, that is, (R)-3,4-dihydroxy-5-((S)-1,2-dihydroxyethyl)furan-2(5H)-one, but also its optical isomer (D isomer). Further, it also includes a D isomer and an L isomer of erythorbic acid, which are stereoisomers of the above-described compounds. The stereoisomers and the optical isomers also have an enediol structure which is required for exerting a reducing ability, and can exert a similar reducing ability. Furthermore, a DL isomer, which is a mixture of these optical isomers, can be used as an "ascorbic acid" of the present invention.

Examples of the ascorbic acid derivative (B) of the present invention include compounds as shown below. The ascorbic acid derivative (B) of the present invention is not limited to these representative examples. The symbol "*" in each chemical structure represents a position where X, Y, or Z is bonded to the five-membered ring of the ascorbic acid.

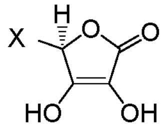

X=

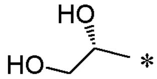

,

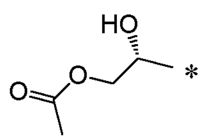

,

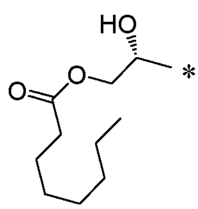

,

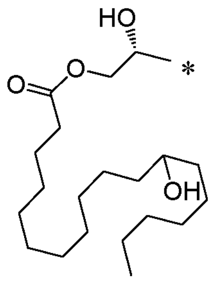 , 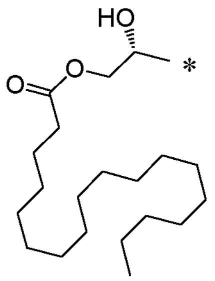 , 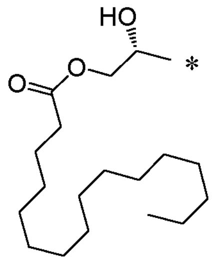 ,

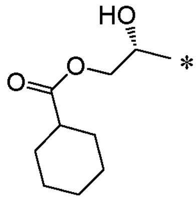 , 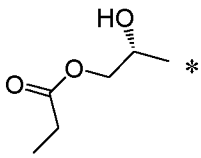 , 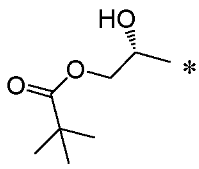 ,

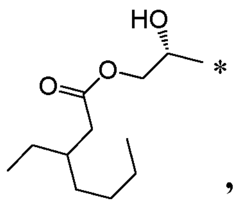 ,

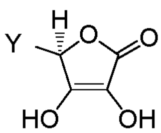 Y= 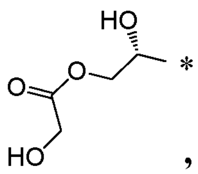 , 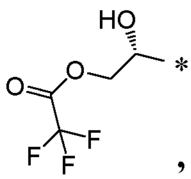 , 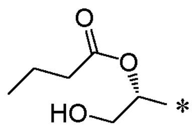

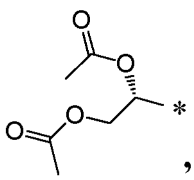 , 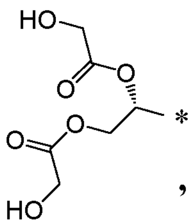 , 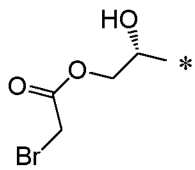

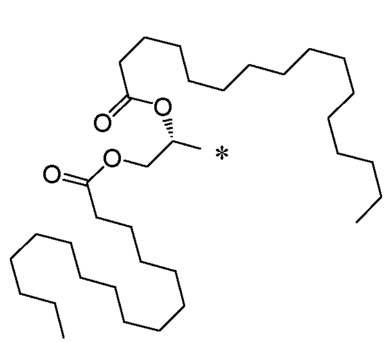 , 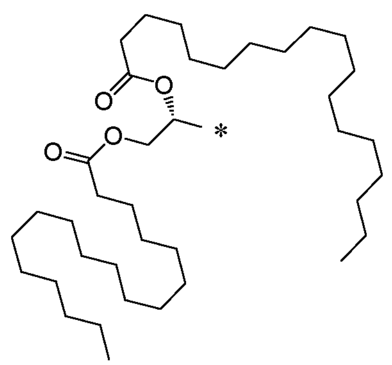

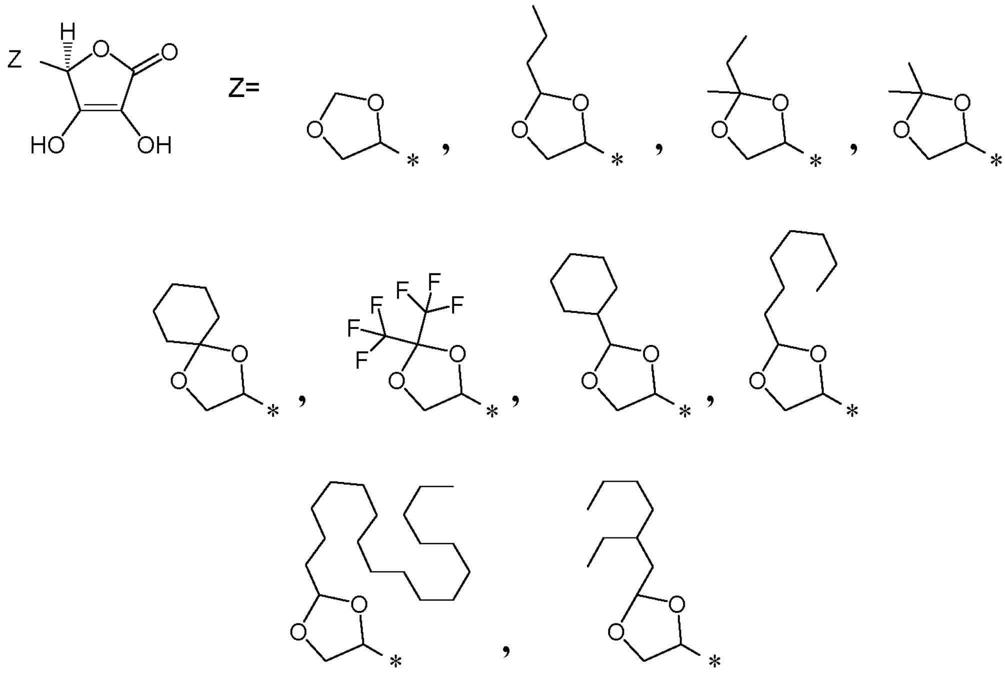

Z= , , , , , , ,

<Method for producing surface-treated copper powder (AB)>

The surface-treated copper powder (AB) can be obtained by, for example and not limited to, colliding a copper powder (A) with an ascorbic acid derivative (B) using a medium for dispersion or deformation. As the medium for dispersion or deformation, spherical beads made of, for example, glass, steel, and zirconia can be used.

This contact step can be carried out by either a dry or a wet method.

In the dry method, a surface-treated copper powder (AB) can be obtained, for example, as follows: introducing a copper powder (A), an ascorbic acid derivative (B), and a medium for dispersion or deformation into a container, sealing the container, colliding them by rotating or vibrating the container including them, or stirring them in the container to adhere a part or all of the ascorbic acid derivative (B) to the surface of the copper powder (A) while deforming the copper powder (A), and then separating the medium for dispersion or deformation.

In the wet method, a surface-treated copper powder (AB) can be obtained as follows: introducing a copper powder (A), an ascorbic acid derivative (B), a liquid medium, and a medium for dispersion or deformation into a container, colliding them by, for example, rotating, vibrating or stirring as described above, removing the medium for dispersion or deformation using, for example, a nylon mesh or a stainless steel mash, removing the liquid medium, and drying.

When the above-described dispersion step including colliding the medium for dispersion or deformation with the copper powder (A) is carried out, publicly-known dispersion apparatuses such as a bead mill, a ball mill, and a shaker can be used.

The liquid medium used for the wet dispersion includes, for example, a publicly known liquid media such as an alcohol, a ketone, an ester, an aromatic, and a hydrocarbon medium. Two or more of the media can be mixed and used. The liquid medium is not particularly limited as long as it is in liquid form at a temperature for conducting the dispersion.

Among the liquid media, a poor solvent in which solubility of an ascorbic acid derivative (B) is relatively low is preferably used because desired amounts of the ascorbic acid derivative (B) can be very efficiently adhered to the surface of a copper powder (A). Examples of the poor solvent for the ascorbic acid derivative (B) include, but are not limited to, toluene, xylene, hexane, octane, isopropanol, and ethyl acetate, and further include a mixed solvent thereof.

In particular, the wet dispersion using a medium for dispersion or deformation and a liquid medium is preferred in that the surface of a copper powder (A) can easily be coated uniformly and efficiently with an ascorbic acid derivative (B) by simple and easy operation. Furthermore, the wet dispersion is preferred in that a coated copper powder (AB) in flake form or leaf shape having a large contact area between particles can be obtained, which results in exertion of a good initial electroconductivity, and in addition, the electroconductivity can be maintained.

The ascorbic acid derivative (B) is preferably used in an amount of 1 to 30 parts by mass, and more preferably in a range of 5 to 10 parts by mass, relative to 100 parts by mass of a copper powder (A). When the amount of ascorbic acid is 1 part by mass or more, oxidation of copper of the surface-treated copper powder (AB) during firing can be prevented and an affinity between the surface-treated copper powder (AB) and a binder resin (C) can be improved.

When the amount of ascorbic acid is 30 parts by mass or less, aggregation of the surface-treated copper powders (AB) can be prevented.

<Binder resin (C)>

The binder resin (C) is preferably mixed in an amount of 5 to 40% by mass relative to 100% by mass of the total of the binder resin (C) and the surface-treated copper powder (AB), and more preferably 5 to 25% by mass. When the amount is 5% by mass or more, intimate adherence of an electroconductive coating to a substrate is further improved and a mechanical strength is also improved. When it is 40% by mass or less, an electroconductivity is further improved.

Examples of the binder resin (C) include publicly-known resins such as an acrylic resin, polybutadiene-based resins, an epoxy compound, an oxetane resin, a piperazine polyamide resin, an addition-type ester resin, a condensed-type ester resin, an amino resin, a polylactic acid resin, an oxazoline resin, a benzoxazine resin, vinyl-based resins, diene-based resins, a terpene resin, a petroleum resin, cellulose-based resins, a polyester resin, a urethane-modified polyester resin, an epoxy-modified polyester resin, a (meth)acrylic resin, a styrene resin, a styrene-(meth)acrylic resin, a styrene-butadiene resin, an epoxy resin, a modified epoxy resin, a phenoxy resin, a vinyl chloride-vinyl acetate copolymer, a butyral resin, an acetal resin, a phenol resin, a polycarbonate resin, a polyether resin, a polyurethane resin, a polyurethane urea resin, a polyamide resin, a polyimide resin, a polyamide imide resin, an alkyd resin, a polyolefin resin, a fluororesin, a ketone resin, a benzoguanamine resin, a melamine resin, a urea resin, a silicone resin, nitrocellulose, a cellulose acetate butyrate (CAB) resin, a cellulose acetate propionate (CAP) resin, rosin, rosin ester, and a maleic acid resin, and can be suitably selected according to physical properties required for the electroconductive composition, the electroconductive film, and the electroconductive material of the present invention. The binder resins (C) may be used alone or in combination of two or more.

The above polyester resin preferably has at least any one of a hydroxy group and a carboxyl group. The polyester resin can be synthesized by a publicly-known method such as a reaction between, for example, a polybasic acid and a polyol, or a transesterification reaction between, for example, a polybasic acid ester and a polyol. The method used for adding a carboxyl group to the polyester resin can be a publicly-known method, and examples of the method include a method including polymerizing the polyester resin, and then carrying out a post addition (ring-opening addition) of a cyclic ester such as ε-caprolactone at 180 to 230°C for blocking, or a method including adding an acid anhydride such as trimellitic anhydride or phthalic anhydride. The polyester resin is preferably a saturated polyester.

Preferred examples of the above polybasic acid include an aromatic dicarboxylic acid, a linear aliphatic dicarboxylic acid, a cycloaliphatic dicarboxylic acid and the like, and a carboxylic acid having 3 or more functional groups and the like. The polybasic acid includes an acid anhydride group-containing compound. The polybasic acids may be used alone or in combination of two or more.

Examples of the aromatic dicarboxylic acid include, but are not limited to, terephthalic acid and isophthalic acid. Examples of the linear aliphatic dicarboxylic acid include, but are not limited to, adipic acid, sebacic acid, and azelaic acid. Examples of the cycloaliphatic dicarboxylic acid include, but are not limited to, 1,4-cyclohexanedicarboxylic acid, dicarboxy hydrogenated Bisphenol A, dimer acid, 4-methylhexahydrophthalic anhydride, and 3-methyl hexahydrophthalic anhydride. Examples of the carboxylic acid having 3 or more functional groups include, but are not limited to, trimellitic anhydride and pyromellitic dianhydride. Examples of other carboxylic acid include, but are not limited to, an unsaturated dicarboxylic acid such as fumaric acid, and a sulfonic acid metal salt-containing dicarboxylic acid such as 5-sulfoisophthalic acid sodium salt.

The above polyol is preferably a diol and a compound having 3 or more hydroxy groups. Examples of the diol include, but are not limited to, ethylene glycol, propylene glycol, 1,4-butanediol, and neopentyl glycol. Examples of the compound having 3 or more hydroxy groups include, but are not limited to, torumethylolpropane, glycerin, and pentaerythritol. The polyols may be used alone or in combination of two or more.

The above polyurethane resin is a compound having a hydroxy group at an end produced by reacting a polyol, diisocyanate, and a diol compound as a chain extender. A molecular chain of the polyurethane resin can be extended using a chain extender. The chain extender is, in general, preferably diol and the like. The polyurethane resin can be synthesized by a publicly-known method.

Examples of preferred polyols used for the synthesis of the polyurethane resin include polyether polyol, polyester polyol, polycarbonate polyol, and polybutadiene glycol. The polyols may be used alone or in combination of two or more.

The polyether polyol is a polymer such as ethylene oxide, propylene oxide, and tetrahydrofuran, and a copolymer thereof.

The polyester polyol is an ester of the polyol and the polybasic acid described with respect to the above polyester resin.

Preferred polycarbonate polyol include 1) a compound produced by reacting a diol or bisphenol with a carbonic ester, and 2) a compound produced by reacting a diol or bisphenol with phosgene in the presence of an alkali. Examples of the carbonic ester include, but are not limited to, dimethyl carbonate, diethyl carbonate, diphenyl carbonate, ethylene

carbonate, and propylene carbonate.

Preferred examples of the diisocyanate include aromatic diisocyanate, aliphatic diisocyanate, and alicyclic diisocyanate. The diisocyanates may be used alone or in combination of two or more.

The above polyurethane urea resin is a compound produced by reacting a polyol and diisocyanate to synthesize a polyurethane prepolymer having an isocyanate group at an end, and further reacting with a polyamine. The polyurethane urea resin can be reacted with a reaction-terminating agent to control molecular weight as required. The polyol and the diisocyanate used are preferably the compounds described with respect to the above polyurethane resin. The polyamine is preferably a diamine. Examples of the reaction-terminating agent include a dialkylamine and a monoalcohol. The polyurethane urea resin can be synthesized by a publicly-known method.

The polyurethane resin and the polyurethane urea resin preferably have a carboxyl group in addition to a hydroxy group. Specifically, they can be obtained by a synthesis method including substituting a part of the diols with a carboxyl group-containing diol in the synthesis. Preferred examples of the diol include dimethylol propionic acid and dimethylolbutyric acid.

When the electroconductive paste contains a polyurethane resin or a polyurethane urea resin, hardness of an electroconductive coating produced is further improved.

When the polyurethane resin or the polyurethane urea resin is synthesized, a solvent can be used. Specifically, preferred examples include ester-based solvents, ketone-based solvents, glycol ether solvents, aliphatic solvents, aromatic solvents, and carbonate solvents. The solvents may be used alone or in combination of two or more.

Examples of the ester-based solvents include, but are not limited to, ethyl acetate, isopropyl acetate, n-butyl acetate, isobutyl acetate, amyl acetate, ethyl lactate, and dimethyl carbonate.

Examples of the ketone-based solvents include, but are not limited to, acetone, methyl ethyl ketone, methyl isobutyl ketone, diisobutyl ketone, diacetone alcohol, isophorone, and cyclohexanon.

Examples of the glycol ether solvent include, but are not limited to, monoethers such as ethylene glycol monoethyl ether, ethylene glycol monoisopropyl ether, and ethylene glycol monobutyl ether, and acetate ester thereof; and diethylene glycol dimethyl ether, diethylene glycol diethyl ether, diethylene glycol monoethyl ether, diethylene glycol monobutyl ether, propylene glycol monomethyl ether, and propylene glycol monoethyl ether, and an acetate ester thereof.

Examples of the aliphatic solvent include, but are not limited to, n-hexane, cyclohexane, and methylcyclohexane.

Examples of the aromatic solvent include, but are not limited to, toluene and xylene.

Examples of the carbonate solvent include, but are not limited to, chain carbonates such as diethyl carbonate and ethyl methyl carbonate; and circular carbonates such as ethylene carbonate and propylene carbonate.

The above epoxy resin is a compound having an epoxy group and a hydroxy group, and a publicly-known compound can be used. The epoxy resin is preferably a polyglycidyl ether obtained by reacting an aromatic diol represented by bisphenol A and bisphenol F with epichlorohydrin. The epoxy resin used is also preferably a so-called phenoxy resin, which is a high molecular epoxy resin. They may be used alone or in combination of two or more.

Then, as selected specific examples of the binder resins (C) used in electroconductive compositions of the present invention, two examples including an electroconductive paste, and an electroconductive adhesive and an electroconductive sheet are described below. It should be noted that applications of the present invention are not limited thereto.

<When used in electroconductive paste>

First, when an electroconductive composition of the present invention is used in an electroconductive paste for producing a wiring circuit, the binder resin (C) is preferably selected from the group consisting of a phenoxy resin, a polyester resin, a polyurethane resin, a polyurethane urea resin, and an epoxy resin in view of intimate adherence to a substrate, solubility in a solvent, and a mechanical strength of a coating film required for an electroconductive composition. The above resins are also preferred in that they favorably disperse a surface-treated copper powder (AB) in combination with an acidic group-containing dispersant (D). These binder resins can be used alone or in combination of two or more.

In this case, a number average molecular weight (hereinafter, referred to as "Mn") of the binder resin (C) is preferably 10,000 to 50,000, and more preferably 20,000 to 40,000. When the Mn is 10,000 or more, reliability with respect to environmental circumstances of an electroconductive composition is improved and, in particular, wet-heat resistance is further improved. The Mn refers to a value equivalent to polystyrene measured by GPC (gel permission chromatography). Further, reliability of a wiring circuit with respect to environmental circumstances means that even when it is exposed to an environment of 85°C and 85% humidity, an electroconductive composition or an electroconductive film itself is not deteriorated by oxidation, and intimate adherence of the electroconductive film to a substrate (e.g., an ITO film) is hardly deteriorated.

In this case, a glass transition temperature (hereinafter, referred to as "Tg") of the binder resin (C) is preferably 5 to 100°C, and more preferably 10 to 95°C. When Tg is 5°C or more, wet-heat resistance of the wiring circuit is further improved. When Tg is 100°C or less, the intimate adherence of the wiring circuit to a substrate is further improved. The

Tg refers to a value measured using DSC (differential scanning calorimeter).

In this case, a binder resin which satisfies both the above Mn and the above Tg is most preferred because of a further improvement of the wiring circuit in reliability.

<When used in electroconductive adhesive or electroconductive sheet>

Next, when the electroconductive composition of the present invention is used in an electroconductive adhesive or an electroconductive sheet, the binder resins (C) are, in particular, preferably a polyurethane resin, a polyurethane urea resin, an addition-type ester resin, an epoxy resin, a phenoxy resin, a polyimide a resin, a polyamide resin, a piperazine polyamide resin, and a polyamide imide resin in view of adherence, flexibility, and coating processability. The above resins are also preferred in that they favorably disperse a surface-treated copper powder (AB) in combination with an acidic group-containing dispersant (D). These binder resins can be used alone or in combination of two or more.

In this case, the binder resin preferably possesses thermohardening properties, and specifically, has in its structure a carboxyl group which is a starting point of a hardening reaction. Further, the binder resin (C) and a hardener can be used in combination.

In this case, an acid value of the binder resin (C) is not specifically limited, but preferably 3 to 100 mg KOH/g, and more preferably 3 to 70 mg KOH/g. It is particularly preferably 3 to 40 mg KOH/g. When the acid value of the binder resin (C) is in a range of 3 to 100 mg KOH/g, flexibility and reliability with respect to environmental circumstances are further improved.

In this case, Tg of the binder resin (C) is preferably -30 to 30°C, more preferably -20 to 20°C. When the Tg is -30 to 30°C, flexibility and adhesive strength are further improved.

In this case, a weight-average molecular weight (hereinafter, referred to as "Mw") of the binder resin (C) is preferably 20,000 to 100,000. When the Mw is 20,000 to 100,000, flexibility and adhesive strength are further improved.

The hardener which is used in combination with the thermohardening binder resin (C) is a material having two or more functional groups which can react with a carboxyl group in the binder resin (C). Examples include publicly-known compounds such as an epoxy compound, an isocyanate compound, an amine compound, an aziridine compound, an organometallic compound, an acid anhydride group-containing compound, and a phenol compound. An epoxy compound or an aziridine compound is preferred. The hardeners may be used alone or in combination of two or more.

<Acidic group-containing dispersant (D)>

The acidic group-containing dispersant (D) in the present invention is used to disperse a surface-treated copper powder (AB), which is not easily dispersible, in an electroconductive composition. When the electroconductive composition contains a dispersant, a binder resin and a microparticle of the surface-treated copper powder (AB) can be easily mixed, leading to improvement in dispersibility. Thus, viscosity of a paste is decreased and the microparticle of the surface-treated copper powder (AB) in a coating can easily be densely arranged in printing to improve contact between the particles. Such a dispersant is preferably a polymeric dispersant.

The polymeric dispersant is generally a polymeric (resin) dispersant containing an affinity portion adsorbing to a particle to be dispersed and a portion having a high affinity to a binder resin. Examples of the above affinity portion include acidic groups such as a carboxyl group, a phosphoric acid group, a sulfonic acid group, a hydroxy group, and maleic acid group. In the present invention, it is required to contain an acidic group as the affinity portion to a surface-treated copper powder (AB). When it is firmly adsorbed to the surface-treated copper powder (AB), a conductive path between the copper particles is interrupted even when it is fired. Thus, an acidic group having a proper adsorptivity is preferred. Among the acidic groups, a phosphoric acid group which has a proper ability to adsorb to and desorb from Copper is preferred.

In the present invention, as the polymeric dispersant among the acidic group-containing dispersants (D), a commercially available product can be used. Examples of the commercially available product include DISPER BYK-102, 110, 111, 118, 170, 171, 174, 2096, BYK-P104, P104S, P105, and 220S manufactured by BYK Additives & Instruments; FLOWLEN G-700, GW-1500, G-100SF, AF-1000, and AF-1005 manufactured by Kyoeisha Chemical Co., Ltd.; and SOLSPERSE-3000, 21000, 36000, 36600, 41000, 41090, 43000, 44000, 46000, 55000, SOLPLUS-D520, D540, and L400 manufactured by LUBRIZOL.

The acidic group-containing dispersant (D) used in the present invention preferably further contains an amino group. The amino group may be any of primary, secondary, and tertiary. The amino group preferably neutralizes the above acidic group.

Although a detailed reasons are not understood yet, the reason why a polymeric dispersant whose acidic group has been neutralized by an amino group-containing substance is preferred may be as follows. In an electroconductive composition, when an amino group-containing substance coordinates to ascorbic acid in a surface-treated copper powder (AB) and then heated during firing, the amino group-containing substance alters the ascorbic acid in the surface-treated

copper powder (AB) into an active form molecular skeleton to promote an oxidation-reduction reaction between a copper oxide formed during the firing and the ascorbic acid. Furthermore, it is considered that the ascorbic acid is consumed by the heating and the amino group-containing substance coordinates to the surface of the thus exposed copper, and accordingly oxidation of copper during firing and oxidation of copper under wet-heat circumstances can be suppressed.

In view of coordination strength, the amino group-containing substance preferably further contains an alkanolamine skeleton having a hydroxy group at an end of the molecule.

In the polymeric dispersant, examples of the portion having a high affinity to a binder resin include polycarboxylate ester polyamides such as polyurethanes and polyacrylates; polycarboxylic acids, polycarboxylic acid (partial) amine salts, polycarboxylic acid ammonium salts, polycarboxylic acid alkylamine salts, polysiloxanes, long-chain polyamino amide phosphoric acid salts, and hydroxy group-containing polycarboxylate esters; an amide synthesized by a reaction between poly (lower alkylene imines) and a polyester having a free carboxyl group; and salts thereof.

Examples of other portions having a high affinity to a binder resin include polyphosphoric acids (salts) such as polyesters, polyethers, polyester ethers, and polyurethanes; and polyphosphoric acids, polyphosphoric acid (partial) amine salts, polyphosphoric acid ammonium salts, and polyphosphoric acid alkylamine salts.

Examples of other portions having a high affinity to a binder resin include (meth)acrylic acid-styrene copolymers, (meth)acrylic acid-(meth)acrylic ester copolymers, styrene-maleic acid copolymers, polyvinyl alcohols, polyvinyl pyrrolidone, vinyl chloride-vinyl acetate copolymers, polyesters, a modified polyacrylates, ethylene oxide/propylene oxide adducts, and fiber-type derivative resins.

In the acidic group-containing dispersant (D) in the present invention, as the polymeric dispersant further having an amino group, a commercially available product can be used. Examples of the commercially available product include ANTI-TERRA-U, U100, and 204, DISPER BYK-106, 130, 140, 142, 145, and 180, and BYK-9076 manufactured by BYK Additives & Instruments; FLOWLEN G-820XF manufactured by Kyoeisha Chemical Co., Ltd.; and SOLSPERSE-26000, 53095, and SOLPLUS-D530 manufactured by LUBRIZOL.

The electroconductive composition of the present invention contains the acidic group-containing dispersant (D) preferably in an amount of 0.1 to 10 parts by mass, and more preferably 0.6 to 1 parts by mass, relative to 100 parts by mass of the surface-treated copper powder (AB). When the dispersant (D) is contained in an amount of 0.1 parts by mass or more, dispersibility of the surface-treated copper powder (AB) is further improved. Furthermore, when the dispersant (D) is contained in an amount of 10 parts by mass or less, electroconductivity of an electroconductive coating is further improved.

<Copper precursor (Y)>

The electroconductive composition of the present invention can further contain a copper precursor. The copper precursor refers to a substance which changes to copper during firing.

The copper precursor (Y) is included preferably in an amount of 0.1 to 50% by mass relative to 100% by mass of the total of the copper precursor (Y) and the surface-treated copper powder (AB), and more preferably 1 to 15% by mass. When the amount is 0.1% by mass or more, surface-treated copper powders (AB) are connected together to make a conductive path stronger, called a contact strengthening effect, leading to improvement in electroconductivity. When the amount is 50% by mass or less, the antioxidative effect of the surface-treated copper powder (AB) is sufficiently exerted.

In the present invention, examples of the copper precursor (Y) include copper salts with an aliphatic carboxylic acid such as copper acetate, copper trifluoroacetate, copper propionate, copper butyrate, copper isobutyrate, copper 2-methylbutyrate, copper 2-ethylbutyrate, copper valerate, copper isovalerate, copper pivalate, copper hexanoate, copper heptanoate, copper octanoate, copper 2-ethylhexanoate, and copper nonanoate; copper salts with a dicarboxylic acid such as copper malonate, copper succinate, and copper maleate; copper salts with an aromatic carboxylic acid such as copper benzoate, and copper salicylate; copper salts with a carboxylic acid having a reducing ability such as copper formate, copper hydroxy acetate, copper glyoxylate, copper lactate, copper oxalate, copper tartrate, copper malate, and copper citrate; copper nitrate; copper cyanide; and copper acetylacetonate. Inter alia, copper formate, which has a higher content of copper in components, is preferred.

When the electroconductive composition of the present invention contains a copper precursor (Y), the electroconductive composition may further contain a copper-producing reaction accelerator for the copper precursor. The copper-producing reaction accelerator for the copper precursor refers to a compound having one or more functional groups in the molecule having a coordinating ability to a copper ion and a copper salt, and it is also a material which reacts with the copper precursor (Y) by mixing and lowers a decomposition temperature of the copper precursor (Y), that is, a copper-producing temperature. The functional group having a coordinating ability to a copper ion and a copper salt is mainly a functional group containing a heteroatom such as an oxygen atom, a nitrogen atom, and a sulfur atom, and specifically, examples include a thiol group, an amino group, a hydrazino group, an amide group, a nitrile group, a hydroxyl group, and hydroxycarbonyl group. The copper-producing reaction accelerator may be a low molecular compound or a high molecular compound.

Structure of the copper-producing reaction accelerator is not specifically limited, but is preferably selected from an amino group-containing compound and a thiol group-containing compound because they cause the large decrease in decomposition temperature of a copper precursor and can lower a firing temperature of the electroconductive composition, and further is most preferably the amino group-containing compound because it causes the largest decrease in decomposition temperature and has a less nasty smell.

The copper-producing reaction accelerator having an amino group include aliphatic amines, cyclic amines, and aromatic amines, and specifically, examples include, but are not limited to, ethyl amine, n-propyl amine, isopropyl amine, n-butylamine, isobutylamine, t-butylamine, n-pentylamine, n-hexylamine, cyclohexylamine, n-octylamine, 2-ethylhexylamine, n-dodecylamine, n-hexadecylamine, oleylamine, stearylamine, ethanol amine, benzylamine, N-methyl-n-propyl amine, methyl-i-propylamine, methyl-i-butylamine, methyl-t-butylamine, methyl-n-hexylamine, methyl cyclohexylamine, methyl-n-octylamine, methyl-2-ethylhexylamine, methyl-n-dodecylamine, methyl-n-tridecylamine, methyl-n-hexadecylamine, methylstearylamine, diethyl amine, dibutylamine, dioctylamine, didodecylamine, distearylamine, diethanol amine, triethyl amine, diethyltriethylamine, tributylamine, trioctylamine, tridodecylamine, tristearylamine, triethanolamine, methylbenzylamine, aniline, N,N-dimethylaniline, p-toluidine, N-methylaniline, 4-butylaniline, pyrrolidine, pyrrole, piperidine, pyridine, hexamethyleneimine, pyrazole, imidazole, piperazine, N-methylpiperazine, N-ethylpiperazine, and DBU.

<Electroconductive particle and Electroconductive composite microparticle>

The electroconductive composition of the present invention can further contain an electroconductive particle. Examples of the electroconductive particle include silver, gold, platinum, copper, nickel, manganese, tin, and indium.

The electroconductive composition of the present invention can further contain an electroconductive composite microparticle. The electroconductive composite microparticle is an electroconductive microparticle having a coating layer with which the surface of a core is coated. The core includes copper which is economical and has a high electroconductivity, and the coating layer includes silver which has a high electroconductivity and has good resistance to deterioration in a resistance value by an acid value (sanka). The silver can be an alloy with, for example, gold, platinum, silver, copper, nickel, manganese, tin, and indium.

Shapes of the electroconductive particle and the electroconductive composite microparticle is not limited as long as a desired electroconductivity is achieved. Specifically, for example, spherical shape, flake form, leaf shape, dendritic form, plate form, needle shape, rod shape, and aciniform are preferred. Two or more types of the electroconductive particles or the electroconductive composite microparticles having these different shapes may be mixed. The electroconductive particles and the electroconductive composite microparticles may be used alone or in combination of two or more.

<Solvent>

The electroconductive composition of the present invention can further contain a solvent. When a solvent is contained, the surface-treated copper powder (AB) is easily dispersible and easily controlled to achieve a suitable viscosity for printing. The solvent can be selected in accordance with solubility of a resin used and a method for printing. The solvents may be used alone or in combination of two or more.

Specifically, preferred examples include ester-based solvents, ketone-based solvents, glycol ether solvents, aliphatic solvents, aromatic solvents, and alcohol solvents.

As the ester-based solvents, the solvents exemplified as solvents which can be used for synthesizing the polyurethane resin or the polyurethane urea resin are also exemplified. Further, examples include cyclic ester-based solvents such as ε-caprolactone and γ-butyrolactone.

As the ketone-based solvents, the glycol ether solvents, and the aliphatic solvents, the solvents exemplified as solvents which can be used for synthesizing the polyurethane resin or the polyurethane urea resin are also exemplified.

Examples of the aromatic solvents include, but are not limited to, toluene, xylene, and tetralin.

Examples of the alcohol solvents include, but are not limited to, methanol, ethanol, n-propyl alcohol, i-propyl alcohol, n-butyl alcohol, i-butyl alcohol, sec-butyl alcohol, pentanol, hexanol, heptanol, octanol, cyclohexanol, benzyl alcohol, and terpineol.

An amount of the solvent is preferably, but is not specifically limited to, about 5 to 400 parts by mass, and more preferably about 5 to 300 parts by mass, relative to 100 parts by mass of the total mass of the surface-treated copper powder (AB), the binder resin (C), and the acidic group-containing dispersant (D). When the amount of the solvent is within the above-described range, it is favorably applicable to a printing or coating method as described below.

<Other additives>

The electroconductive composition of the present invention can contain, for example, a hardener for binder resins, reducing agent, an abrasion resistant improver, infrared absorber, ultraviolet absorbers, an aromatic, a hardener, an antioxidant, an organic pigment, an inorganic pigment, antifoaming agent, a plasticizer, a flame retardant, and a humectant, as required.

<Method for preparing electroconductive composition>

The electroconductive composition of the present invention can be prepared by blending the above-described raw materials in a predetermined ratio and mixing using a mixer. As the mixer, a publicly-known apparatuses such as Planetary Mixer and DISPER can be used. Further, in addition to using a mixer, dispersion can be carried out to disperse the surface-treated copper powder (AB) more minutely. Examples of the dispersing apparatus include a ball mill, a bead mill, and a triple roller.

[Electroconductive material]

Using the electroconductive composition of the present invention, an electroconductive material can be obtained. That is, onto a substrate, the electroconductive composition of the present invention can be printed or coated, and dried or fired to afford an electroconductive material including a substrate and an electroconductive film which is a cured material of the electroconductive composition.
As the above printing or coating, for example, screen printing, flexographic printing, offset printing, gravure printing, gravure offset printing, and, in addition, publicly-known coating methods such as a gravure coating method, a kiss coating method, a die coating method, a LIP coating method, Comma Coating method, a blade method, a roller coating method, a knife coating method, a spray coating method, a bar coating method, a spin coating method, and a dip coating method can be used.
Furthermore, after the printing, it is preferred to carry out a drying or firing step using heat. Examples of the drying or firing step include publicly-known drying or firing apparatuses such as a hot air oven, an infrared oven, and a microwave oven, and a combined oven which is a combination of them.
In addition, in the firing using heat, a so-called light firing can be used. The light firing is a technique in which a coating is irradiated instantaneously with light having a wavelength in a range of wavelengths which can be absorbed by the coating, the coating received the light undergoes a heat- or photo-decomposition reaction by the irradiation to fire the coating in a short time. Type of the light for the irradiation is not specifically limited, and examples include a mercury lamp, a metal halide lamp, a chemical lamp, a xenon lamp, a carbon arc lamp, and laser light. As compared with a common heat firing, for example, by a hot air oven, the light firing is preferred because it can fire in a short time, resulting in suppression of oxidation of a copper powder and suppression of deterioration of a substrate by long application of heat. Furthermore, if a substrate does not have an absorption band absorbing the irradiated light, a substrate which is readily affected by heat can be used. When laser light is used as light for irradiation, an area of the irradiation can be altered to produce electroconductivity in a desired portion of the coating.
In order to suppress oxidation of a copper powder during firing in the air, it is preferred that an electroconductive composition is printed and dried, and subsequently pressurized to suppress spaces between surface-treated copper powders (AB), leading to reduction of air in an electroconductive film before firing, and then fired, or fired while applying pressure to reduce air in the electroconductive film during the firing. The conditions during application of pressure can be either atmospheric pressure conditions or reduced pressure conditions.
When it is fired after application of pressure, in addition to a common thermohardening using, for example, a hot air oven, the above-described light firing can be used. When it is fired while application of pressure, techniques used are not specifically limited, and examples include application of pressure using a heated roller and thermal press. Inter alia, it is preferred to use the thermal press which can apply heat and pressure more uniformly.
Processing conditions of the thermal press are not specifically limited, and the thermal press is generally carried out under conditions at a temperature of about 120 to 190°C and a pressure of about 1 to 3 MPa for about 1 to 60 minutes. Further, thermohardening may be performed at 120 to 190°C for 10 to 90 minutes after pressure connection.
The substrate may have various shapes and is not specifically limited, and is preferably a sheet form substrate. The sheet form substrate is not specifically limited, and examples include a polyimide film, a polyamide imide film, a polyphenylene sulfide film, a polyparaphenylene terephthalamide film, a polyether nitrile film, a polyether sulfone film, a polyethylene terephthalate film, a polyethylene naphthalate film, a polybutylene terephthalate film, a polycarbonate film, a polyvinyl chloride film, and a polyacrylic film. Also included are ITO films in which an ITO (Indium Tin Oxide) layer is formed on these films and ITO glass in which an ITO layer is formed on a glass plate. The sheet form substrate further includes ITO ceramics in which an ITO layer is formed on a ceramic plate. It is not necessary that the ITO layer is formed

over the entire surface of the film or plate, and the ITO layer may be formed partially. When a reflow step is performed, the sheet form substrate is preferably a polyphenylene sulfide and a polyimide. When the reflow step is not performed, it is preferably a polyethylene terephthalate. Examples of the substrate other than the sheet form ones include a substrate in which glass fibers are impregnated with an epoxy resin.

Thickness of the sheet form substrate is not specifically limited, and preferably about 50 to 350 μm, and more preferably 100 to 250 μm. When the thickness is within the range described above, mechanical properties, shape stability, dimensional stability, handling, and the like tend to be appropriate.

Thickness of the electroconductive film is not specifically limited, and in a circuit drawing application, it is generally preferably 3 to 30 μm, and more preferably 4 to 10 μm. When the thickness is 3 to 30 μm, adhesion to the sheet form substrate becomes more intimate. In an application using the electroconductive film as a sheet form electroconductive layer, the thickness is preferably 1 to 100 μm, and more preferably 3 to 50 μm. When the thickness is in the range of 1 to 100 μm, both electroconductivity and other physical properties such as bending resistance can be easily attained.

On the electroconductive film, other materials may be stacked.

A wiring circuit formed using an electroconductive composition according to the present invention can be preferably used in touch panel displays of, for example, a mobile phone, a smartphone, a tablet computer device, a notebook computer, and a car navigation system. Although a display does not exist, it can be used in, without limitation, electronic apparatuses equipped with a wiring circuit, such as a digital camera, a video camera, a CD/DVD player, and the like. Furthermore, it can also be used in an antenna circuit of a RFID, and a receiver coil and a transmitter coil of a wireless charging system using a wiring circuit formed by using the electroconductive composition.

In addition, an electroconductive composition of the present invention can provide an electroconductive sheet having good electroconductivity even with firing in the air and also having an intimate substrate adherence and environmental reliability in heat-resistance and humidity-resistance. Examples of type of the electroconductive sheet preferably include an anisotropic electroconductive sheet, a static elimination sheet, ground connection sheet, a membrane circuit sheet, electric conductive bonding sheet, a heat conductive sheet, conductive sheet for jumper circuit, and an electromagnetic shielding electroconductive sheet.

## Examples

The present invention is described below in more detail with reference to Examples and Comparative Examples, but the present invention is not limited to the following Examples. The term "parts" refers to "parts by mass", and "%" refers to "% by mass".

[Copper powder (A)]

A1: Dendritic copper powder (D50 particle size: 10 μm; BET specific surface area: 0.3 $m^2/g$)
A2: spherical copper powder (D50 particle size: 6.5 μm; BET specific surface area: 0.13 $m^2/g$)
A3: spherical copper powder (D50 particle size: 1.1 μm; BET specific surface area: 0.64 $m^2/g$)

<Measuring D50 particle size of copper powder>

Cumulative particle size (D50) of a volume-based particle size distribution was measured using a laser diffraction particle size analyzer "SALD-3000" (manufactured by SHIMADZU CORPORATION).

<BET specific surface area>

A value calculated from a surface area measured using a flow-type specific surface area analyzer "FlowSorb II" (manufactured by SHIMADZU CORPORATION) according to the following equation was defined as a specific surface area and was recorded.

$$\text{Specific Surface Area } (m^2/g) = \text{Surface Area } (m^2)/\text{Mass of Powder } (g)$$

[Ascorbic acid or Derivatives thereof (B)]

B1: L-ascorbic acid
B2: 6-O-palmitoyl-L-ascorbic acid
B3: (+)-5,6-O-isopropylidene-L-ascorbic acid

[Surface-treated copper powder (AB)]

In a glass bottle, 26.87g of copper powder A1, 1.34g of ascorbic acid derivative B1: L-ascorbic acid, 33g of toluene, and 25g of 1 mm glass beads were introduced, and vigorously shaken. Then, they were filtered using a nylon mesh to remove the glass beads from the mixture, and further filtered under reduced pressure to filter off the toluene from the mixture to obtain a solid. The solid was further vacuum dried to obtain a surface-treated copper powder (AB).

An appearance of the surface of particles of the obtained surface-treated copper powder (AB) was observed using a scanning electron microscope S-4300 (manufactured by HITACHI, Ltd.) operating at an acceleration voltage of 5 kV and magnification of 10000 (Fig. 1), and in addition, elemental mapping was performed with respect to carbon and copper using an energy dispersive X-ray spectrometer EX-370 (manufactured by HORIBA, Ltd.) (Fig. 2). Since distribution of carbon corresponds to the ascorbic acid derivative B1, from the above observation, it was found to be a surface-treated copper powder (AB) in which the ascorbic acid derivative B1 was adhered to the surface of the copper powder A1.

When the surface-treated copper powder (AB) was heated to 550°C under nitrogen to measure weight loss owing to an organic substance, it was found that almost all of the ascorbic acid derivative B1 added was integrated with the copper powder A1.

[Copper precursor (Y)]

Copper formate tetrahydrate was vacuum dried at 40°C to obtain anhydrous copper formate, which was then ground using a mortar for 5 minutes.

[Binder resin (C)]

<Binder resin C1>

In 30 parts of isophorone and 30 parts of $\gamma$-butyrolactone, 40 parts of JER1256 (a bisphenyl A-type epoxy resin, Mn = 25,000, Tg: 95°C, epoxy equivalent weight: 7,500, hydroxyl value: 190, manufactured by Mitsubishi Chemical Corporation) was dissolved to obtain a solution of a binder resin C with a nonvolatile content of 40%.

<Binder resin C2>

In a reaction vessel equipped with a mixer, a thermometer, a reflux condenser, a dropping apparatus, and a nitrogen intake pipe, 414 parts of diol having a Mn of 1006 obtained from adipic acid, terephthalic acid, and 3-methyl-1,5-pentanediol, 8 parts of dimethylolbutyric acid, 145 parts of isophorone diisocyanate, and 40 parts of toluene were placed, which were reacted at 90°C for 3 hours under a nitrogen atmosphere. To this reaction mixture, 300 parts of toluene was added to obtain a solution of a polyurethane prepolymer having an isocyanate group at an end. Then, to a mixture of 27 parts of isophoronediamine, 3 parts of di-n-butylamine, 342 parts of 2-propanol, and 576 parts of toluene, 816 parts of the solution of the obtained polyurethane prepolymer was added, and reacted at 70°C for 3 hours to obtain a solution of a polyurethane resin. To this solution, 144 parts of toluene and 72 parts of 2-propanol were added to obtain a solution of a polyurethane resin (binder resin C2) with a solid content of 30%. It had a Mw of 54,000, Tg of -7°C, and an acid value of 3 mg KOH/g.

<Binder resin C3>

In a reaction vessel equipped with a mixer, a thermometer, a dropping apparatus, a reflux condenser, and a gas intake pipe, 50 parts of methyl ethyl ketone was introduced, which was heated to 80°C while nitrogen gas was fed into the vessel, and a mixture of 3 parts of methacrylic acid, 32 parts of n-butyl methacrylate, 65 parts of lauryl methacrylate, and 4 parts of 2,2'-azobisisobutyronitrile was added dropwise at the same temperature over 1 hour to carry out a polymerization reaction. After the dropwise addition was finished, the reaction was further continued at 80°C for 3 hours, then a solution of 1 parts of azobisisobutyronitrile dissolved in 50 parts of methyl ethyl ketone was added, which was

further reacted at 80°C for 1 hour, and cooled to room temperature. Then, it was diluted with methyl ethyl ketone to obtain a solution of an acrylic resin (binder resin C3) containing a carboxyl group with a solid content of 30%. It had a Mw of 27,000, Tg of -11°C, and an acid value of 20 mg KOH/g.

<Binder resin C4>

In a 4-neck flask equipped with a mixer, a reflux condenser, a nitrogen intake pipe, and a thermometer, 195.1 parts of polycarbonate diol (Kuraray Polyol C-2090), 29.2 parts of tetrahydrophthalic anhydride (RIKACID TH: manufactured by New Japan Chemical Co., Ltd.) as an acid anhydride group-containing compound for a main chain and 350 parts of toluene as a solvent were placed, under nitrogen flow, heated to 60°C with stirring to dissolve uniformly. Then, the flask was heated to 110°C to react for 3 hours. Afterwards, it was cooled to 40°C, then 26 parts of a bisphenol A-type epoxy compound (YD-8125: manufactured by NIPPON STEEL & SUMIKIN CHEMICAL CO., LTD.; an epoxy equivalent weight = 175g/eq) and 4 parts of triphenylphosphine as a catalyst were added, and heated to 110°C to react for 8 hours. It was cooled to room temperature, and then 11.56 parts of tetrahydrophthalic anhydride was added as an acid anhydride group-containing compound for a side chain to react at 110°C for 3 hours. It was cooled to room temperature, and then adjusted to make a solid content of 30% with toluene to obtain an addition-type polyester resin solution (binder resin C4). It had a Mw of 15,000, Tg of -25°C, and an acid value of 25 mg KOH/g.

<Binder resin C5>

In a 4-neck flask equipped with a mixer, a reflux condenser, a nitrogen intake pipe, and a thermometer, 54.5 parts of sebacic acid, 5.5 parts of 5-hydroxyisophthalic acid, 148.4 parts of a dimer diamine "Priamine 1074" (manufactured by Croda Japan KK, an amine value of 210.0 mg KOH/g), and 100 parts of ion exchanged water were placed, and stirred to achieve a constant temperature by heat generation. When the temperature became stable, it was heated to 110°C, and 30 minutes after confirmation of an outflow of water, heated to temperature of 120°C, and then dehydration reaction was continued with elevation of temperature at a rate of 10°C per 30 minutes. When temperature reached 230°C, the reaction was continued at the same temperature for 3 hours, it was kept under about 2 KPa of vacuum for 1 hour. Then, the temperature was decreased, and it was diluted with 146 parts of toluene and 146 parts of 2-propanol to obtain a solution of a polyamide resin (binder resin C5). It had a Mw of 36,000, Tg of 5°C, and an acid value of 12 mg KOH/g.

Mn, Mw, Tg, an epoxy equivalent weight, an acid value, and a hydroxyl value of a binder resin were obtained according to the following methods.

<Measurement of Mn and Mw>

Apparatus: GPC (gel permission chromatography)
Model: Shodex GPC-101, manufactured by Showa Denko K.K.
Column: GPC KF-G + KF805L + KF803L + KF8 02, manufactured by Showa Denko K.K.
Detector: Shodex RI-71, a differential refractometer, manufactured by Showa Denko K.K.
Eluent: THF
Flow rate: sample: 1 mL/min, reference: 0.5 mL/min
Temperature: 40°C
Sample: 0.2% THF solution (injection: 100 μL)
Calibration curve: A calibration curve was obtained using the following twelve polystyrene molecular weight standards manufactured by Tosoh Corporation:

F128 ($1.09 \times 10^6$), F80 ($7.06 \times 10^5$), F40 ($4.27 \times 10^5$), F20 ($1.90 \times 10^5$), F10 ($9.64 \times 10^4$), F4 ($3.79 \times 10^4$), F2 ($1.81 \times 10^4$), F1 ($1.02 \times 10^4$), A5000 ($5.97 \times 10^3$), A2500 ($2.63 \times 10^3$), A1000 ($1.05 \times 10^3$), and A500 ($5.0 \times 10^2$).
Baseline: A rising edge of the first peak in a GPC curve was defined as a starting point. No peak was detected at retention time of 25 minutes (molecular weight: 3,150), and thus it was defined as an ending point. The line connecting these two points was used as a baseline to calculate a molecular weight.

<Measurement of Tg>

Apparatus: DSC-220C, a differential scanning calorimeter, manufactured by Seiko Instruments Inc.
Sample: approximately 10 mg (measuring to 0.1 mg)
Heating rate: 10°C/min (measuring up to 200°C)
Tg temperature: It was defined as a temperature at an intersection of a line which was obtained by extending a baseline in a lower temperature area toward a higher temperature area with a tangent line to a curve in the lower temperature side of a melting peak at a point where a slope of the tangent line became maximum.

<Measurement of epoxy equivalent weight>

It was measured according to JIS K 7236.

<Measurement of hydroxyl value and acid value>

These were measured according to JIS K 0070.

[Dispersant (D)]

D1: A dispersant which is a polyester/polyether dispersant containing a phosphoric acid group in which an acidic group is neutralized by an alkanolamine (DISPER BYK-180, manufactured by BYK Additives & Instruments)
D2: A polyester/polyether dispersant containing a phosphoric acid group (DISPER BYK-110, manufactured by BYK Additives & Instruments.
D3: A polyester a dispersant having an aromatic carboxylic acid described in WO 2008/007776 A
D4: Prepared by neutralizing dispersant D3 with an alkanolamine
D5: A silane coupling agent containing an acrylic group (KBM-5103, manufactured by Shin-Etsu Chemical Co., Ltd.)

[Hardener]

Hardener 1: An epoxy compound (ADEKA RESIN EP-4100, bisphenol A-type, an epoxy equivalent weight = 190g/Eq, manufactured by ADEKA corporation)
Hardener 2: An aziridine compound (CHEMITITE PZ-33, manufactured by NIPPON SHOKUBAI CO., LTD.)

[Electroconductive particle]

Silver-coated copper: A dendritic form powder (D50 particle size: 11 μm, silver coating ratio: 10%, and BET specific surface area: 0.2 $m^2$/g)

<Example 1>

Using a Planetary Mixer, 25 parts of a solution of binder resin C1 (solid content of 40% by mass), 0.68 parts of dispersant D1 (solid content of 80% by mass), 90 parts of the above-described surface-treated copper powder (AB) (containing 85.7 parts by mass of copper powder A1, and 4.3 parts by mass of ascorbic acid derivative B1), and 3.2 parts of diethylene glycol monobutyl ether acetate were mixed, and then dispersed using a triple roller to prepare an electroconductive composition. The obtained electroconductive composition contained about 84.6% of a nonvolatile content, and the surface-treated copper powder (AB) accounted for about 89.5% of the nonvolatile content, an epoxy resin accounted for about 10%, and the dispersant accounted for about 0.5%.

<Example 2 to 22>

Electroconductive compositions having compositions shown in Tables 1 to 3 were prepared in the same way as in Example 1, except that types and amounts of the copper powder (A) and the ascorbic acid derivative (B) were changed to obtain surface-treated copper powders (AB), and then types and amounts of the dispersant (D) were changed. In all surface-treated copper powders (AB) used in Examples 2 to 22, it was found that ascorbic acid derivatives (B) were present and adhered to the surface of copper powders, as in the case of Example 1.

<Examples 23 and 24>

In a similar manner to Example 1, 25 parts of a solution of binder resin C1 (containing 10 parts by mass of the binder resin C1), 0.68 parts of dispersant D1 (containing 0.54 parts of nonvolatile content), 81 parts of the above-described surface-treated copper powder (AB)(containing 77.1 parts by mass of copper powder A1 and 3.9 parts by mass of ascorbic acid derivative B1), 9 parts of anhydrous copper formate, and 3.2 parts of diethylene glycol monobutyl ether acetate were mixed using a Planetary Mixer, and then dispersed using a triple roller to prepare electroconductive compositions. The obtained electroconductive compositions contained about 84.6% of nonvolatile contents, and surface-treated copper powders (AB) accounted for about 80.6% of the nonvolatile contents, epoxy resins accounted for about 10%, and dispersants accounted for about 0.5%.

<Examples 25 and 26>

As shown in Table 4, stearylamine was further added as a copper-producing reaction accelerator to the composition of Example 23, and a similar procedure to that of Example 23 was followed to obtain electroconductive compositions.

<Example 27 to 40>

Each of the solid contents was added to accomplish the compositions shown in Tables 4 and 5, and a mixed solvent of toluene-isopropyl alcohol (mass ratio of 2 : 1) as a solvent for dilution was further added to give a nonvolatile content concentration of 45%. This mixture was stirred using DISPER for 10 minutes to obtain electroconductive compositions.

<Comparative Examples 1>

As shown in Table 3, an electroconductive composition was prepared without using ascorbic acid derivative B1 or dispersant D1.

<Comparative Examples 2>

As shown in Table 3, an electroconductive composition was prepared using dispersant D1 and without using ascorbic acid derivative B1.

<Comparative Examples 3>

As shown in Table 3, when copper powder A1 was dispersed in binder resin C1, both ascorbic acid derivative B1 and dispersant D1 were used to prepare an electroconductive composition. That is, a surface-treated copper powder (AB) was not used.

<Comparative Examples 4>

As shown in Table 3, an electroconductive composition was prepared using a surface-treated copper powder (AB) and without using dispersant D1.

<Comparative Examples 5>

As shown in Table 3, an electroconductive composition was prepared using a surface-treated copper powder (AB) and using dispersant D5 having no acidic group.

<Comparative Examples 6 and 7>

As shown in Table 5, an electroconductive composition was prepared without using ascorbic acid derivative B1.

In Comparative Examples 1 to 5, similar dispersing and mixing methods to those of Example 1 were followed. In Comparative Examples 6 and 7, similar dispersing and mixing methods to those of Example 27 were followed.

<Preparation of electroconductive sheet>

With respect to Examples 1 to 26 and Comparative Examples 1 to 5, the obtained electroconductive compositions were applied onto a corona-treated polyethylene terephthalate film (hereinafter, referred to as "PET film") having a thickness of 75 μm in a pattern having a shape of 15 mm in length and 30 mm in width by screen printing, and dried and heated by any of the following conditions to obtain electroconductive sheets having a film thickness of about 10 to 25 μm. A thickness of the electroconductive sheet was measured using a MH-15M measuring system (manufactured by NIKON CORPORATION).

With respect to Examples 27 to 40 and Comparative Examples 6 and 7, the compounds were coated on a polyimide film using a bar coater, and dried and heated by any of the following conditions to obtain electroconductive sheets having a film thickness of about 5 to 12 μm. A thickness of the electroconductive sheet was measured using a MH-15M measuring system (manufactured by NIKON CORPORATION).

Conditions of drying and heating were as follows.

Heating condition 1: Dried in an oven at 150°C for 30 minutes in the air.
Heating condition 2: Dried at 80°C for 30 minutes in the air, followed by pressing with heat and pressure at 150°C under 1 MPa for 2 minutes in the air. Removed from a pressing machine and dried at 150°C for 30 minutes in the air.
Heating condition 3: Dried at 80°C for 30 minutes, followed by pressing with heat and pressure at 150°C under 1 MPa for 30 minutes in the air.
Heating condition 4: Dried at 100°C for 2 minutes in the air, followed by pressing with heat and pressure at 150°C under 2 MPa for 30 minutes in the air.

<Surface resistance value; initial and after wet-heat resistance testing>

Initial

A surface resistance value of an electroconductive sheet was measured within 3 hours after the electroconductive sheet was prepared using a serial 4-point probe (LSP) of Loresta GX MCP-T610 measurement system (Mitsubishi Chemical Analytech Co., Ltd.) under conditions at 25°C and 50% humidity.

After wet-heat resistance testing

The obtained electroconductive sheet was separately left under conditions at 85°C and 85% humidity for 24 hours, then transferred under conditions at 25°C and 50% humidity, and then a surface resistance value was measured in a similar manner.

<Calculation of volume resistivity>

From a surface resistance value and a film thickness measured by the above method, a volume resistivity of an electroconductive sheet was calculated using the following equation:

$$\text{Volume resistivity } (\Omega\cdot\text{cm}) = (\text{surface resistivity: } \Omega/\square) \times (\text{a film thickness: cm})$$

When the value exceeds $1.0 \times 10^5$, it is represented by "$1.0 \times 10^5$↑" as OVER RANGE.

[Table 1]

| | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| Composition of electroconductive composition | Surface treatment Copper powder (AB) | A1 | 85.7 | 89.55 | 89.11 | 81.8 | 85.7 | 85.7 | 85.7 | 60.0 | 66.7 | 85.7 |
| | | A2 | | | | | | | | | | |
| | | A3 | | | | | | | | | | |
| | | B1 | 4.3 | 0.45 | 0.89 | 8.2 | 4.3 | 4.3 | 4.3 | 30.0 | 3.3 | 4.3 |
| | | B2 | | | | | | | | | | |
| | | B3 | | | | | | | | | | |
| | Dispersant (D) | D1 | 0.54 | 0.54 | 0.54 | 0.54 | 0.09 | 0.9 | 1.8 | 0.54 | 0.54 | |
| | | D2 | | | | | | | | | | 0.54 |
| | | D3 | | | | | | | | | | |
| | | D4 | | | | | | | | | | |
| | Binder resin C1 | | 10.0 | 10.0 | 10.0 | 10.0 | 10.0 | 10.0 | 10.0 | 10.0 | 30.0 | 10.0 |
| Heating condition | | | 1 | | | | | | | | | |
| Volume resistivity [Ω·cm] | | Initial | $3.8\times10^{-3}$ | $9.6\times10^{0}$ | $3.6\times10^{0}$ | $2.5\times10^{-3}$ | $8.9\times10^{-2}$ | $3.0\times10^{-3}$ | $5.7\times10^{-3}$ | $2.7\times10^{0}$ | $6.0\times10^{0}$ | $7.4\times10^{-3}$ |
| | | Wet-heat resistance After testing | $9.0\times10^{-2}$ | $5.2\times10^{2}$ | $1.7\times10^{1}$ | $8.4\times10^{-1}$ | $4.0\times10^{2}$ | $2.1\times10^{-1}$ | $8.6\times10^{0}$ | $6.7\times10^{1}$ | $7.4\times10^{2}$ | $2.1\times10^{-1}$ |

* All mixing ratios are expressed in parts by mass (converted to solid content).

[Table 2]

| | | | Example | | | | | | | | | |
|---|---|---|---|---|---|---|---|---|---|---|---|---|
| | | | 11 | 12 | 13 | 14 | 15 | 16 | 17 | 18 | 19 | 20 |
| Composition of electroconductive composition | Surface treatment Copper powder (AB) | A1 | 85.7 | 85.7 | 85.7 | 85.7 | | | | | | |
| | | A2 | | | | | 81.8 | 78.3 | 78.3 | 78.3 | 37.5 | |
| | | A3 | | | | | | | | | 37.5 | 75.0 |
| | | B1 | 4.3 | 4.3 | | | 8.2 | | | | 15.0 | 15.0 |
| | | B2 | | | 4.3 | | | 11.7 | 11.7 | 11.7 | | |
| | | B3 | | | | 4.3 | | | | | | |
| | Dispersant (D) | D1 | | | 0.54 | 0.54 | 0.54 | 4.5 | 9.0 | 18.0 | 0.54 | 0.54 |
| | | D2 | | | | | | | | | | |
| | | D3 | 0.9 | | | | | | | | | |
| | | D4 | | 0.9 | | | | | | | | |
| | Binder resin C1 | | 10.0 | 10.0 | 10.0 | 10.0 | 10.0 | 10.0 | 10.0 | 10.0 | 10.0 | 10.0 |
| Heating condition | | | 1 | | | | | | | | | |
| Volume resistivity [Ω·cm] | | Initial | $3.3\times10^{-2}$ | $6.9\times10^{-3}$ | $2.9\times10^{-2}$ | $4.8\times10^{-2}$ | $4.2\times10^{-3}$ | $5.9\times10^{-2}$ | $3.2\times10^{-1}$ | $7.8\times10^{-1}$ | $4.4\times10^{-2}$ | $3.0\times10^{-2}$ |
| | | Wet-heat resistance After testing | $2.4\times10^{0}$ | $2.3\times10^{-2}$ | $5.7\times10^{-1}$ | $3.7\times10^{0}$ | $2.7\times10^{-1}$ | $6.1\times10^{0}$ | $9.4\times10^{1}$ | $8.4\times10^{2}$ | $6.2\times10^{-1}$ | $1.8\times10^{0}$ |

* All mixing ratios are expressed in parts by mass (converted to solid content).

[Table 3]

| | | | Comparative Example | | | | | Example | | |
|---|---|---|---|---|---|---|---|---|---|---|
| | | | 1 | 2 | 3 | 4 | 5 | 1 | 21 | 22 |
| Composition of electroconductive composition | Surface treatment Copper powder (AB) | A1 | 90 | 90 | 85.7 | 85.7 | 85.7 | 85.7 | | |
| | | B1 | | | | 4.3 | 4.3 | 4.3 | | |
| | Ascorbic acid derivative B1 | | | | 4.3 | | | | | |
| | Dispersant (D) | D1 | | 0.54 | 0.54 | | | 0.54 | | |
| | | D5 | | | | | 0.54 | | | |
| | Binder resin | C1 | 10 | 10.0 | 10.0 | 10.0 | 10.0 | 10.0 | | |
| Heating condition | | | 1 | | | | | 1 | 2 | 3 |
| Volume resistivity [Ω·cm] | | Initial | $1.2\times10^{4}$ | $3.4\times10^{4}$ | $3.7\times10^{1}$ | $1.2\times10^{2}$ | $1.5\times10^{1}$ | $3.8\times10^{-3}$ | $4.9\times10^{-5}$ | $3.1\times10^{-5}$ |
| | | Wet-heat resistance After testing | $1.0\times10^{5}\uparrow$ | $1.0\times10^{5}\uparrow$ | $8.7\times10^{4}$ | $1.0\times10^{5}\uparrow$ | $1.0\times10^{5}\uparrow$ | $9.0\times10^{-2}$ | $6.4\times10^{-5}$ | $3.7\times10^{-5}$ |

* All mixing ratios are expressed in parts by mass (converted to solid content).

[Table 4]

| | | | Example | | | | | | | | | |
|---|---|---|---|---|---|---|---|---|---|---|---|---|
| | | | 23 | 24 | 25 | 26 | 27 | 28 | 29 | 30 | 31 | 32 |
| Composition of electroconductive composition | Surface treatment Copper powder (AB) | A1 | 77.1 | | 77.1 | | 38.1 | | 34.3 | | 38.1 | |
| | | B1 | 3.9 | | 3.9 | | 1.9 | | 1.7 | | 1.9 | |
| | Electroconductive particle | Silver-coated copper | | | | | | | | | | |
| | Copper precursor (Y) | Anhydrous copper formate | 9.0 | | 9.0 | | | | 4.0 | | | |
| | Reaction accelerator | Stearylamine | | | 9.0 | | | | | | | |
| | Dispersant (D) | D1 | 0.54 | | 0.54 | | 0.24 | | 0.24 | | 0.24 | |
| | Binder resin (C) | C1 | 10.0 | | 10.0 | | | | | | | |
| | | C2 | | | | | 10.0 | | 10.0 | | | |
| | | C3 | | | | | | | | | 10.0 | |
| | | C4 | | | | | | | | | | |
| | | C5 | | | | | | | | | | |
| | Hardener | Hardener 1 | | | | | 3.0 | | 3.0 | | 3.0 | |
| | | Hardener 2 | | | | | 0.20 | | 0.20 | | 0.20 | |
| Heating condition | | | 1 | 3 | 1 | 3 | 1 | 4 | 1 | 4 | 1 | 4 |
| Volume resistivity [Ω·cm] | | Initial | $3.9\times10^{-3}$ | $6.9\times10^{-5}$ | $3.2\times10^{-3}$ | $5.2\times10^{-5}$ | $4.2\times10^{-3}$ | $4.1\times10^{-4}$ | $3.5\times10^{-3}$ | $8.5\times10^{-5}$ | $4.1\times10^{-3}$ | $4.0\times10^{-4}$ |
| | | Wet-heat resistance After testing | $4.3\times10^{-2}$ | $7.5\times10^{-5}$ | $6.3\times10^{-3}$ | $5.9\times10^{-5}$ | $6.7\times10^{-2}$ | $5.1\times10^{-4}$ | $4.7\times10^{-2}$ | $9.0\times10^{-5}$ | $2.7\times10^{-2}$ | $5.2\times10^{-4}$ |

* All mixing ratios are expressed in parts by mass (converted to solid content).

[Table 5]

| | | | Example | | | | | | | | Comparative Example | |
|---|---|---|---|---|---|---|---|---|---|---|---|---|
| | | | 33 | 34 | 35 | 36 | 37 | 38 | 39 | 40 | 6 | 7 |
| Composition of electroconductive composition | Surface treatment Copper powder (AB) | A1 | 38.1 | | 34.3 | | 34.3 | | 26.7 | | 36.0 | |
| | | B1 | 1.9 | | 1.7 | | 1.7 | | 1.3 | | | |
| | Electroconductive particle | Silver-coated copper | | | | | | | 12.0 | | | |
| | Copper precursor (Y) | Anhydrous copper formate | | | 4.0 | | 4.0 | | | | 4.0 | |
| | Reaction accelerator | Stearylamine | | | | | 4.0 | | | | | |
| | Dispersant (D) | D1 | 0.24 | | 0.24 | | 0.24 | | 0.24 | | 0.24 | |
| | Binder resin (C) | C1 | | | | | | | | | | |
| | | C2 | | | | | 10.0 | | 10.0 | | 10.0 | |
| | | C3 | | | | | | | | | | |
| | | C4 | 10.0 | | | | | | | | | |
| | | C5 | | | 10.0 | | | | | | | |
| | Hardener | Hardener 1 | 3.0 | | 3.0 | | 3.0 | | 3.0 | | 3.0 | |
| | | Hardener 2 | 0.20 | | 0.20 | | 0.20 | | 0.20 | | 0.20 | |
| Heating condition | | | 1 | 4 | 1 | 4 | 1 | 4 | 1 | 4 | 1 | 4 |
| Volume resistivity [Ω·cm] | | Initial | $3.6\times10^{-3}$ | $3.1\times10^{-4}$ | $3.5\times10^{-3}$ | $7.9\times10^{-5}$ | $2.6\times10^{-3}$ | $7.0\times10^{-5}$ | $3.9\times10^{-3}$ | $3.3\times10^{-4}$ | $3.5\times10^{2}$ | $1.9\times10^{1}$ |
| | | Wet-heat resistance After testing | $7.4\times10^{-2}$ | $4.1\times10^{-4}$ | $5.4\times10^{-2}$ | $8.5\times10^{-5}$ | $4.3\times10^{-3}$ | $7.6\times10^{-5}$ | $4.5\times10^{-2}$ | $3.5\times10^{-4}$ | $6.8\times10^{4}$ | $2.7\times10^{4}$ |

* All mixing ratios are expressed in parts by mass (converted to solid content).

As apparent from Tables 1 to 2, the electroconductive compositions of Examples 1 to 20 show good electroconductivity and wet-heat resistance.

On the other hand, as shown in Table 3, those of Comparative Examples 1 and 2 containing no ascorbic acid derivative have a resistance value of far beyond $10^4$ Ω·cm even at initial, and are far from electroconductive pastes or electroconductive sheets. In Comparative Examples 3, in which, although an ascorbic acid derivative was contained, the surface of a copper powder was not treated in advance and it was simply mixed at the time of dispersing in a binder resin, an initial resistance value was smaller than those in Comparative Examples 1 and 2, but wet-heat resistance was not good. Also, in Comparative Examples 4, in which a surface-treated copper powder (AB) was used but a dispersant (D) was not used at the time of dispersing in a binder resin, and in Comparative Examples 5, in which dispersant D5 containing no acidic group was used, as in Comparative Example 3, an initial resistance values were smaller than those in Comparative Examples 1 and 2, but wet-heat resistances were not good.

In Example 23 including a copper precursor, reduction in electroconductivity after the wet-heat resistance testing was prevented as compared to that in Example 1 including no copper precursor.

As shown in Tables 3 and 4, in thermal pressed Examples 21, 22, 24, 26, 28, 30, 32, 34, 36, 38, and 40, electroconductivities were superior to those in the cases without press, and the electroconductivities were maintained at a high level after the wet-heat resistance testing.

An initial electroconductivity in Comparative Examples 6, in which a copper precursor was included but no ascorbic acid derivative was included, was much lower than an initial electroconductivity in Example 29 including a copper precursor and an ascorbic acid derivative.

An electroconductive paste containing a copper precursor but containing no an ascorbic acid derivative with thermal press (Comparative Examples 7) improved in an initial electroconductivity to some extent as compared to that without thermal press (Comparative Examples 6), but the electroconductivity was significantly decreased by the wet-heat resistance testing.

On the other hand, an electroconductive paste containing a copper precursor and an ascorbic acid derivative with thermal press (Example 30) significantly improved in an initial electroconductivity as compared to that without thermal press (Example 29), and the electroconductivity was maintained at an extremely high level even after the wet-heat resistance testing.

An electroconductive composition according to the present invention can exert a good electroconductivity with firing in the air even without thermal press, and can provide, by thermal press, an electroconductive sheet having an intimate substrate adherence and environmental reliability in heat-resistance and humidity-resistance. Furthermore, a wiring circuit formed using an electroconductive composition according to the present invention can be preferably used, for example, in touch panel displays of a mobile phone, a smartphone, a tablet computer device, and a notebook computer; an antenna circuit for a RFID; and a coil for a wireless charging system.

## Claims

1. An electroconductive composition comprising: a surface-treated copper powder (AB) wherein ascorbic acid or a derivative thereof (B) represented by the following general formula (1) or general formula (2) is adhered to a surface of a copper powder (A); a binder resin (C); and a phosphoric acid group-containing dispersant (D) or an acidic group and amino group containing dispersant (D):

General formula (1)

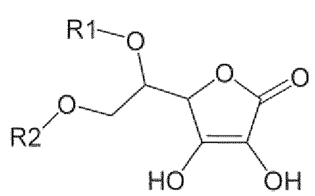

in general formula (1), R1 and R2, each independently, represent a hydrogen atom, or an optionally substituted acyl group,

General formula (2)

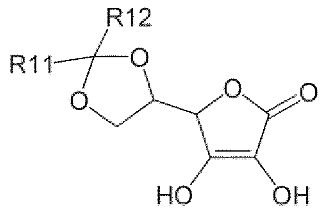

in general formula (2), R11 and R12, each independently, represent a hydrogen atom, or an optionally substituted alkyl group.

**2.** The electroconductive composition according to claim 1, wherein R1 and R2 of the ascorbic acid represented by general formula (1) or the derivative thereof (B) are hydrogen atoms.

**3.** The electroconductive composition according to claim 1 or 2, wherein an amount of the ascorbic acid or the derivative thereof (B) is 1 to 30 parts by mass relative to 100 parts by mass of the copper powder (A).

**4.** The electroconductive composition according to any one of claims 1 to 3, wherein an amount of the dispersant (D) is 0.1 to 10 parts by mass relative to 100 parts by mass of the surface-treated copper powder (AB).

**5.** The electroconductive composition according to any one of claims 1 to 4, further comprising a copper precursor (Y) .

**6.** A method for producing an electroconductive composition, comprising:

adhering ascorbic acid or a derivative thereof (B) represented by the following general formula (1) or general formula (2) to a surface of a copper powder (A) to obtain a surface-treated copper powder (AB), and
mixing the surface-treated copper powder (AB), a binder resin (C), and an acidic group-containing dispersant (D) :

General formula (1)

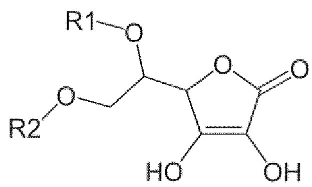

in general formula (1), R1 and R2, each independently, represent a hydrogen atom, or an optionally substituted acyl group,

General formula (2)

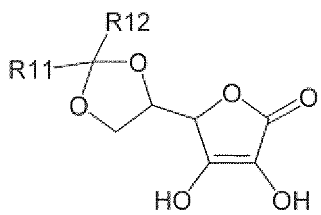

in general formula (2), R11 and R12, each independently, represent a hydrogen atom, or an optionally substituted alkyl group.

**7.** The method for producing an electroconductive composition according to claim 6, wherein the dispersant (D) is a phosphoric acid group-containing dispersant.

**8.** The method for producing an electroconductive composition according to claim 6 or 7, wherein the dispersant (D) further contains an amino group.

**9.** An electroconductive material, comprising: a substrate, and an electroconductive film which is a dried material or a cured material prepared by heating the electroconductive composition according to any one of claims 1 to 5 at a temperature of 120 to 190°C for 10 to 90 minutes.

**Patentansprüche**

**1.** Elektrisch leitfähige Zusammensetzung, umfassend: ein oberflächenbehandeltes Kupferpulver (AB), wobei Ascorbinsäure oder ein Derivat davon (B), dargestellt durch die folgende allgemeine Formel (1) oder die allgemeine Formel (2), an einer Oberfläche eines Kupferpulvers (A) haftet; ein Bindemittelharz (C); und ein Phosphorsäuregruppen enthaltendes Dispersionsmittel (D) oder ein Säure- und Aminogruppen enthaltendes Dispersionsmittel (D):

Allgemeine Formel (1)

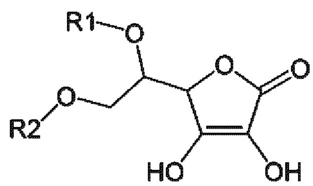

in der allgemeinen Formel (1), stellen R1 und R2 jeweils unabhängig voneinander ein Wasserstoffatom oder eine optional substituierte Acylgruppe dar,

Allgemeine Formel (2)

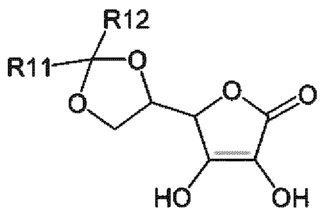

in der allgemeinen Formel (2), stellen R11 und R12 jeweils unabhängig voneinander ein Wasserstoffatom oder eine optional substituierte Alkylgruppe dar.

**2.** Elektrisch leitfähige Zusammensetzung gemäß Anspruch 1, wobei R1 und R2 der Ascorbinsäure, die durch die allgemeine Formel (1) oder des Derivats davon (B) dargestellt wird, Wasserstoffatome sind.

**3.** Elektrisch leitfähige Zusammensetzung gemäß Anspruch 1 oder 2, wobei eine Menge der Ascorbinsäure oder des Derivats davon (B) 1 bis 30 Masseteile bezogen auf 100 Masseteile des Kupferpulvers (A) beträgt.

**4.** Elektrisch leitfähige Zusammensetzung gemäß irgendeinem der Ansprüche 1 bis 3, wobei eine Menge des Dispersionsmittels (D) 0,1 bis 10 Masseteile bezogen auf 100 Masseteile des oberflächenbehandelten Kupferpulvers (AB) beträgt.

**5.** Elektrisch leitfähige Zusammensetzung gemäß irgendeinem der Ansprüche 1 bis 4, weiterhin umfassend einen Kupfervorläufer (Y).

**6.** Verfahren zur Herstellung einer elektrisch leitfähigen Zusammensetzung, umfassend:

Anhaften von Ascorbinsäure oder eines Derivats davon (B), dargestellt durch die folgende allgemeine Formel (1) oder allgemeine Formel (2), an einer Oberfläche eines Kupferpulvers (A), um ein oberflächenbehandeltes Kupferpulver (AB) zu erhalten, und

Mischen des oberflächenbehandelten Kupferpulvers (AB), eines Bindemittelharzes (C) und eines Säuregruppen enthaltenen Dispersionsmittels (D):

Allgemeine Formel (1)

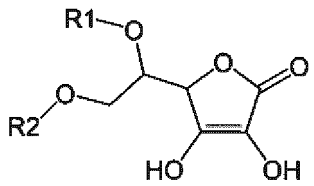

in der allgemeinen Formel (1), stellen R1 und R2 jeweils unabhängig voneinander ein Wasserstoffatom oder eine optional substituierte Acylgruppe dar,

Allgemeine Formel (2)

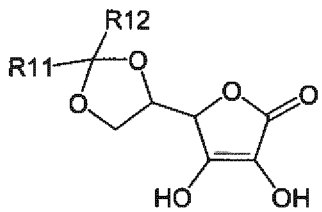

in der allgemeinen Formel (2), stellen R11 und R12 jeweils unabhängig voneinander ein Wasserstoffatom oder eine optional substituierte Alkylgruppe dar.

7. Verfahren zur Herstellung einer elektrisch leitfähigen Zusammensetzung gemäß Anspruch 6, wobei das Dispersionsmittel (D) ein Phosphorsäuregruppen enthaltendes Dispersionsmittel ist.

8. Verfahren zur Herstellung einer elektrisch leitfähigen Zusammensetzung gemäß Anspruch 6 oder 7, wobei das Dispersionsmittel (D) weiterhin eine Aminogruppe enthält.

9. Elektrisch leitfähiges Material, umfassend: ein Substrat und einen elektrisch leitfähigen Film, der ein getrocknetes Material oder ein gehärtetes Material ist, hergestellt durch Erhitzen der elektrisch leitfähigen Zusammensetzung gemäß irgendeinem der Ansprüche 1 bis 5 bei einer Temperatur von 120 bis 190°C für 10 bis 90 Minuten.

## Revendications

1. Composition électro-conductrice comprenant : une poudre de cuivre traitée en surface (AB), dans laquelle de l'acide ascorbique ou un dérivé de celui-ci (B), représenté par la formule générale (1) ou la formule générale (2) ci-dessous, est amené à adhérer à une surface d'une poudre de cuivre (A) ; une résine liante (C) ; et un dispersant contenant un groupe acide phosphorique (D) ou un dispersant contenant un groupe aminé et un groupe acide (D) :

Formule générale (1) :

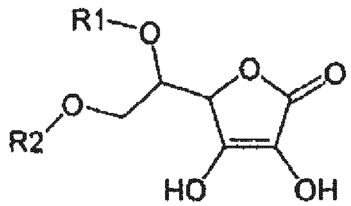

dans la formule générale (1), R1 et R2, chacun indépendamment, représentent un atome d'hydrogène, ou un groupe acyle éventuellement substitué,

Formule générale (2) :

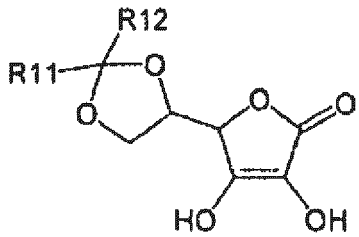

dans la formule générale (2), R11 et R12, chacun indépendamment, représentent un atome d'hydrogène, ou un groupe alkyle éventuellement substitué.

2. Composition électro-conductrice selon la revendication 1, dans laquelle R1 et R2 de l'acide ascorbique représenté par la formule générale (1) ou le dérivé de celui-ci (B) sont des atomes d'hydrogène.

3. Composition électro-conductrice selon la revendication 1 ou 2, dans laquelle une quantité de l'acide ascorbique ou du dérivé de celui-ci (B) représente entre 1 et 30 parts en masse par rapport à 100 parts en masse de la poudre de cuivre (A).

4. Composition électro-conductrice selon l'une quelconque des revendications 1 à 3, dans laquelle une quantité du dispersant (D) représente entre 0,1 et 10 parts en masse par rapport à 100 parts en masse de la poudre de cuivre traitée en surface (AB).

5. Composition électro-conductrice selon l'une quelconque des revendications 1 à 4, comprenant en outre un précurseur de cuivre (Y).

6. Procédé pour la production d'une composition électro-conductrice, comprenant :

- l'adhérence d'un acide ascorbique ou d'un dérivé de celui-ci (B), représenté par la formule générale (1) ou la formule générale (2) ci-dessous, à une surface d'une poudre de cuivre (A) pour obtenir une poudre de cuivre traitée en surface (AB), et
- le mélange de la poudre de cuivre traitée en surface (AB), d'une résine liante (C) et d'un dispersant contenant un groupe acide (D) :

Formule générale (1) :

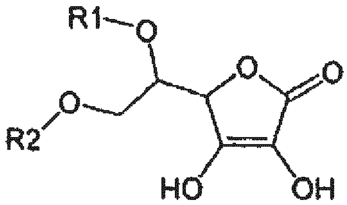

dans la formule générale (1), R1 et R2, chacun indépendamment, représentent un atome d'hydrogène, ou un groupe acyle éventuellement substitué,

Formule générale (2) :

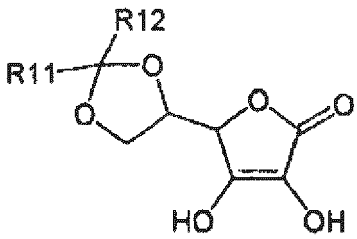

dans la formule générale (2), R11 et R12, chacun indépendamment, représentent un atome d'hydrogène, ou un groupe alkyle éventuellement substitué.

7. Procédé pour la production d'une composition électro-conductrice selon la revendication 6, dans lequel le dispersant (D) est un dispersant contenant un groupe acide phosphorique.

8. Procédé pour la production d'une composition électro-conductrice selon la revendication 6 ou 7, dans lequel le dispersant (D) contient également un groupe aminé.

9. Matériau électro-conducteur, comprenant : un substrat, et un film électro-conducteur consistant en un matériau séché ou en un matériau durci, préparé en chauffant la composition électro-conductrice selon l'une quelconque des revendications 1 à 5 à une température de 120 à 190° pendant 10 à 90 minutes.

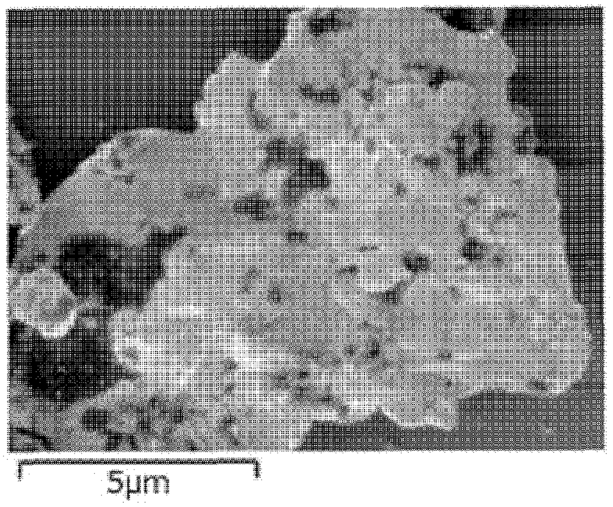


FIG. 1

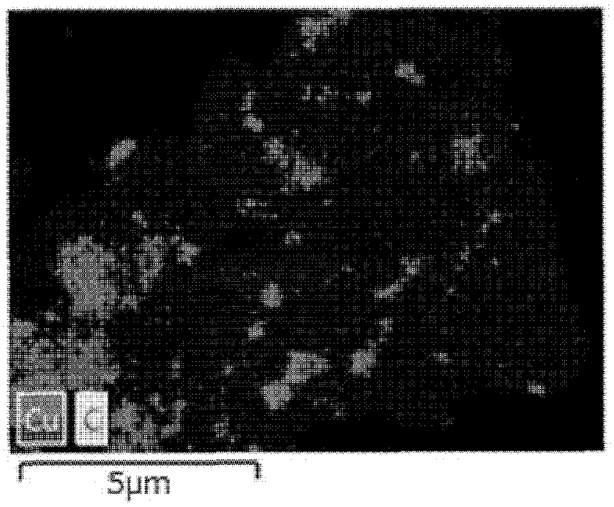


FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H873780 A
- WO 2014104032 A
- JP 2015049988 A
- JP 2007184143 A
- WO 2008007776 A